# EUROPEAN PATENT SPECIFICATION

(11) **EP 1 358 791 B1**
(45) Date of publication and mention of the grant of the patent: **18.10.2006**
(21) Application number: 03009528.5
(22) Date of filing: 28.04.2003
(51) Int. Cl.: A01G 9/12

(54) **Topiary article and method of making the same**
Topiarformteil und Verfahren zu seiner Herstellung
Article topiaire et méthode pour le fabriquer

(30) Priority: 03.05.2002 US 139071
(43) Date of publication of application: 05.11.2003
(73) Proprietor: Smithers-Oasis Company, 2020 Front Street Suite 301 Cuyohoga Falls, OH 44221 (US)
(72) Inventor: Walton, Charles F., Hudson, Summit, Ohio (US); Hammer, Patricia R., Encinitas, San Diego, California (US)
(74) Representative: Kesselhut, Wolf

(56) References cited:
- WO-A-98/02031
- FR-A- 2 627 344
- GB-A- 2 193 909
- US-A- 3 630 811

## Description

### BACKGROUND OF THE INVENTION

The creation of topiaries is an ancient practice of shaping plant material according to the vision of its creator. Earlier practices of this art included shaping the plants themselves through the laborious practices of pruning, bending, clipping, and cutting to shape and encourage the plant material to take on the proper form. Use of these practices limited the types of plant material to those that could effectively define the desired forms. To that end, earlier topiary materials included boxwoods, yews, juniper, and arbor-vitae. As will be appreciated, these methods of creating topiary were extremely time consuming and elevated the creation of topiary to a highly skilled sculptural art. As interest in topiary art has ebbed and flowed through the course of history, those practiced in this art have diminished. Fortunately, several examples of these topiary works have been preserved and have inspired advances allowing modern artisans to more rapidly bring their topiary works to life.

The advances in the topiary art have centered on the use of wire frame forms to greatly reduce the time and effort necessary to create a particular shape. For example, wire frames have been developed to create architectural forms (U.S. Patent No. 2,113,523), animal forms (U.S. Patent No. D 253,943; D 253,944; D 254,056; and 4,190,984), and geometrical shapes (U.S. Patent No. 3,630,811). The previous mentioned patents are incorporated herein by reference. The use of such frames has enabled the creation of large scale topiary works that may be formed in a relatively short period of time.

These frames permit rapid creation of a large scale topiary by eliminating the need to grow a single plant to sufficient size before shaping that plant into a form. Instead, a layer of plant material covers a growth media that is contained within the wire frame. The wire frame structure defines a skeleton that, in addition to supporting the growth media, guides the growth of plant material to form the desired shape. Typically, the skeleton forms an exoskeleton for the growth media, and plant material is grown externally of the skeleton to cover it. As the plants grow, the frame provides a guide for vine-like plants, on which they are able to intertwine and spread. For a more complete discussion of techniques for using wire frames and the frames themselves, reference may be made to "The New Topiary Imaginative Techniques From Longwood Gardens" by Patricia Riley Hammer, published by Garden Art Press 1991, incorporated herein by reference.

Outside of wire frame topiary, open celled floral foams have been used to create flower arrangements such as wedding bouquets and wreaths. Beneficially, the open cell floral foam is wettable and provides a source of water for the flowers inserted therein. The foam also maintains its shape and ability to support flowers in the foam, when wet. One drawback shared with organic planting substrates, however, is that the open celled surfaces of the foam are susceptible to evaporative loss of water therefrom. As can be appreciated, since the water entrapped within the foam provides nourishment to the plant material, it is desirable to maintain this fluid within the foam for the plant's consumption.

GB-A-2193909 discloses a plastic foam product which comprises a hydrophilic plastics foam body in the shape of a cross, the bottom of which is coated with a water impermeable coating like ethylene vinyl acetate co-polymer which is applied to the bottom at elevated temperatures in form of a liquid and which solidifies at room temperature. The document gives no teaching towards coating the upper part of the hydrophilic plastics foam body, in order to reduce the evaporative water loss.

In the case of floral arrangements, wreaths, bouquets, and other similar arrangements, do not typically require continuing watering. In most cases these types of arrangements are used for a limited time and then discarded. When creating topiaries, however, successive watering is necessary to allow the plant material to grow and fill in or to maintain the topiary for a long period of time. Depending on the application, a topiary may be expected to last for months or longer. Consequently, the ability of the growth medium to retain water becomes an important issue. In one aspect, the ability of the growth media to retain water affects the ease with which one may care for the topiary and maintain the plant growth. In a related aspect, it affects the quantity of resources including water, fertilizer, and manpower expended in maintaining the topiary. In some instances, topiaries made using natural growth media, such as sphagnum moss and soil mixtures, may require daily watering. While of itself, this amount of watering may not seem significant, when applied to a large scale exhibition, such as large size topiaries or gardens containing numerous topiaries, like those found at amusement parks, zoos, and historical topiary preserves, it may be necessary to dedicate an entire crew of persons to water the topiaries full time on a daily basis. Thus, if one were able to extend the watering period by even a slight amount, in addition to reducing the amount of water used, it would significantly reduce the labor costs at these locations. Even from the perspective of a single person maintaining his or her own topiary, a lengthened watering period would alleviate the burden of maintaining a topiary to an appreciable extent.

### SUMMARY OF THE INVENTION

It is an object of the present invention to provide an article used to create a topiary having improved water retention in comparison to traditional soil mixtures.

It is a further object of the present invention to provide an article used to create topiary that is less susceptible to water loss by evaporative means.

It is still a further object of the present invention to provide an article that can be readily formed into shapes useful in the creation of topiary.

It is yet another object of the present invention to provide an article used to create topiary that receives mature planting material to reduce the time needed to complete the topiary.

It is another object of the present invention to provide a molded article used to create topiary constructed of an open celled foam.

It is a further object of the present invention to provide a method of molding an article used to create topiary.

It is still a further object of the present invention to provide a method of applying decorative material to a molded article used to create topiary.

It is still a further object of the present invention to provide a method of making a topiary using a molded article as a form.

In light of at least one of the foregoing objects, the present invention provides a topiary article used in the creation of topiary, the topiary article including a planting substrate constructed of an open celled foam, the substrate having an outer surface, and a skin formed on the outer surface of the article.

The present invention further provides a method of forming a topiary article including the steps of providing a mold cavity having a selected shape, delivering an open-celled foam formulation material into said cavity, allowing the material to foam, filling the cavity and solidify to form the molded article.

The present invention further provides a method of creating a topiary including the steps of providing a mold article constructed of an open celled foam, the article having a selected shape, attaching plant material to the article, such that, the plant material takes root within the article, and propagating the growth of the plant material to cover the article, whereby the topiary is created in the selected form.

The present invention further provides a method of creating topiary including providing an article constructed of open celled foam material having a selected shape, creating a receptacle within the article adapted to receive potted plant material having ^^^ runners, attaching same at selected locations on the article, and growing the plant material to cover at least a portion of the topiary.

The present invention further provides a topiary article used in the creation of topiary, the topiary article including a planting substrate constructed of an open celled foam, the substrate having an outer surface, a skin formed on the outer surface of the article, and a receptacle adapted to receive a mature plant formed in the substrate.

### BRIEF DESCRIPTION OF THE DRAWINGS

Fig. 1 is a perspective view of a topiary article according to the concepts of the present invention depicting a molded planting substrate having a shape, the shape shown with planting material growing over a portion of the substrate to form a topiary;
Fig. 2 is a partially sectioned side elevation depicting details of the topiary article shown in Fig. 1, including an implantation recess adapted to receive a soil bound root system of plant material within the substrate and further depicting the water table within the substrate;
Fig. 3 is a fragmentary enlarged view of the area indicated in Fig. 2 depicting further details of the topiary article including, a skin formed on the exterior of the substrate, a layer of adhesive adjacent the skin, and a decorative layer attached to the substrate by the adhesive, and further depicting attachment of the plant material growing from the soil bound root system to the substrate by way of a mechanical fastener;
Fig. 4 is a fragmentary enlarged sectional view similar to Fig. 3 depicting details of the substrate including, an open celled foam structure with a skin formed on its exterior;
Fig. 5 is a partially sectioned side elevation of an alternative topiary article depicting the use of multiple planting materials within a single topiary article and completely covering the exterior of the topiary article with plant material;
Fig. 6A is a schematic sectional side elevation depicting a molding process according to the present invention where foam is injected into a closed mold to form the article;
Fig. 6B is a schematic depiction similar to Fig. 6A, depicting the formed article partially sectioned to show internal details thereof released from the mold;
Fig. 6C is a schematic depiction of the method of creating a topiary article according to the present invention depicting application of an adhesive to the topiary article;
Fig. 6D is a schematic view similar to Fig. 6C depicting application of decorative material, for example, sphagnum moss, to the substrate and collection of excess decorative material in a bin;
Fig. 6E is a schematic view similar to Fig. 6D depicting removal of a portion of the topiary article to form a plant material receptacle within the substrate;
Fig. 6F is a schematic view similar to Fig. 6E depicting implantation of a soil bound root system within the plant material receptacle; and
Fig. 6G is a schematic view similar to Fig. 6F depicting watering of the plant material.

### DETAILED DESCRIPTION OF THE INVENTION

The present invention relates to the production of a planting substrate generally indicated by the numeral 10, which can be used in a variety of applications including the creation of floral and other planting material displays, for example, topiaries. It will be appreciated that the substrate may be molded into any desired shape and thus reference to a particular shape within this description is not to be viewed as limiting. For sake of simplicity and to aid the reader in their understanding of the invention, the following terms will be used to describe the present invention.

For purposes of this disclosure, a "topiary" will refer to any decorative arrangement of plant material or other material on a planting substrate 10 according to the present invention irrespective of its shape or application. The particular topiaries T and T' depicted in the accompanying figures are provided merely as an example.

It is understood that planting material often contains arm-like extensions, for example, branches, runners, chutes, vines, or tendrils. For purposes of this invention, and for sake of simplicity, the term "runners" will be used to collectively refer to these extensions.

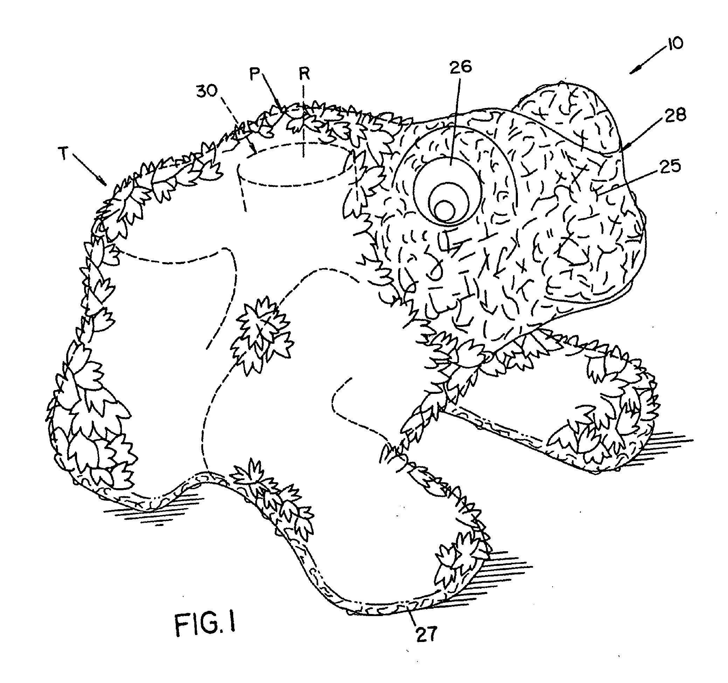

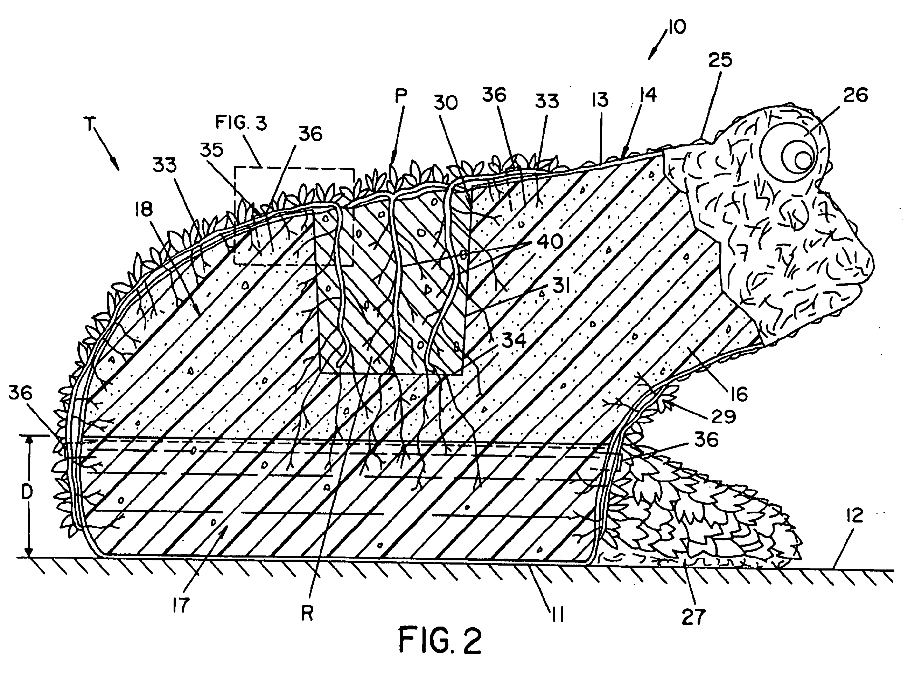

One representative form of a pre-shaped plant substrate embodying the concepts of the present invention is referred to generally by the numeral 10 in the accompanying drawings. Planting substrate 10 may be molded into virtually any shape, and, thus, the representative shape shown is not intended to be limiting. For purposes of example, a planting substrate 10 having a frog shape is depicted in Figs. 1 and 2. The planting substrate 10 may be formed from a hydrophilic rigid or semi rigid open-celled foam material, for example, a thermoplastic foam, or a thermoset foam. Examples of suitable thermoset foams would include, without limitation, polyurethane, polyisocyanurate, phenol formaldehyde, and urea formaldehyde foams. Other suitable foam materials may include thermoplastic foams, for example, foams made from hydrophilic acrylic-based polymers, polyesters and starch-based materials. While a single form has been shown, it will be appreciated that any number of forms may be created limited only by the imagination of the user. Advantageously, the preformed planting substrate 10 allows the creation of these forms and shaped topiaries created therewith without the use of a wire frame. For several representative examples within the topiary art, reference may be made to "The New Topiary Imaginative Techniques From Longwood Gardens" by Patricia Riley Hammer, published by Garden Art Press 1991, incorporated herein by reference.

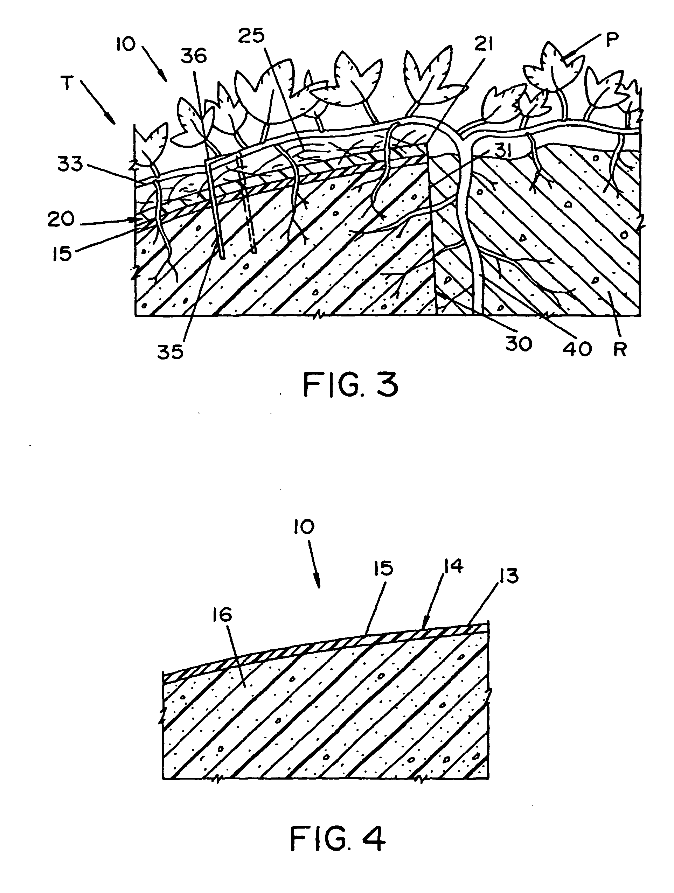

With reference to Fig. 2, planting substrate 10 has a base 11 which may rest on a supporting surface or be exposed to a surrounding atmosphere for example when hanging. For purposes of simplifying the description, it will be assumed that the base 11 is resting on a supporting surface 12 with the remaining surfaces, collectively indicated by the numeral 13, of the article 10 exposed. For simplicity to the base 11 and exposed surfaces 13 will be collectively referred to as an outer surface 14. As best shown in Fig. 4, a skin 15 forms the outer surface 14 of article 10. As further shown in Fig. 4, the interior portion of the article, which will be referred to as a core 16, may be an open celled structure that allows water to migrate throughout the core 16. It is expected that the majority of the water will migrate to create a saturated zone, generally indicated by the numeral 17 having a depth D indicated by the arrow shown in Fig. 2. After watering, the unsaturated zone, generally indicated by the numeral 18 may be wet and, in comparison to the saturated zone 17, is better aerated providing ideal growth conditions for the plant material, which is generally indicated by the letter P. The creation of the saturated zone 17 provides a water source toward which the root system of the plant material P grow.

In contrast to traditional peat moss and soil growth media, the open celled foam retains water for a much greater period of time reducing the number of watering necessary to maintain healthy plant growth. Further, by forming a skin 15 on the outer surface 14 of the article 10, the skin, which is at least partially closed, greatly reduces evaporative water loss common in previously existing planting substrates. The improved water retention and aeration of zone 18 improves the growth of plant material P in comparison to soil. To further reduce evaporative loss, a coating, generally indicated by the numeral 20, in Fig. 3, may optionally be applied to the article 10. Coating 20 may be applied for other purposes as well, for example, weatherproofing, painting, or for purposes of attaching material to the substrate 10. For example, an adhesive 21 may be applied outside of the outer surface 14 or skin 15. It will be appreciated that the coating 20 may be applied in selected locations based user's design choice, or for functional purposes. For example, to facilitate drainage, when using a coating that could retard the passage of water from the substrate 10, it may be advantageous to not coat the base 11 of the planting substrate 10.

In the example shown in Fig. 3, an adhesive 21 is applied to the skin 15. In addition to providing further sealing of the foam core 16, adhesive 21 may be used to attach decorative articles, generally indicated by the numeral 25, to the outside surface 14 of the article 10. The type of decorative article to be used is limited only by the imagination of the user, and thus, the decorative articles 25 shown in the accompanying Figures are for example purposes only. As shown in the depicted embodiment, the outer surface 14 may be covered with sphagnum moss 67 to give the foam article a more natural appearance. It will be appreciated that similar natural coverings used traditionally in the topiary art may be used to achieve the same natural effect. In addition, other ornamentation may be applied to the article 10, such as, for example, decorative eyes 26 used with animal, insect, reptile, human, aquatic, and other similar character forms, as in the frog example shown.

As best shown in Fig. 2, the decorative material may be applied to the entire article 10, including the base 11, as depicted at 27. It will appreciated, however that, if desired, only a portion of the article 10 may be covered. For example, as shown in Fig. 1, if only a portion of the article 10, such as, the head portion 28, in the frog example, is to be exposed from the plant material P, the user may chose to only have this portion covered with decorative material 25.

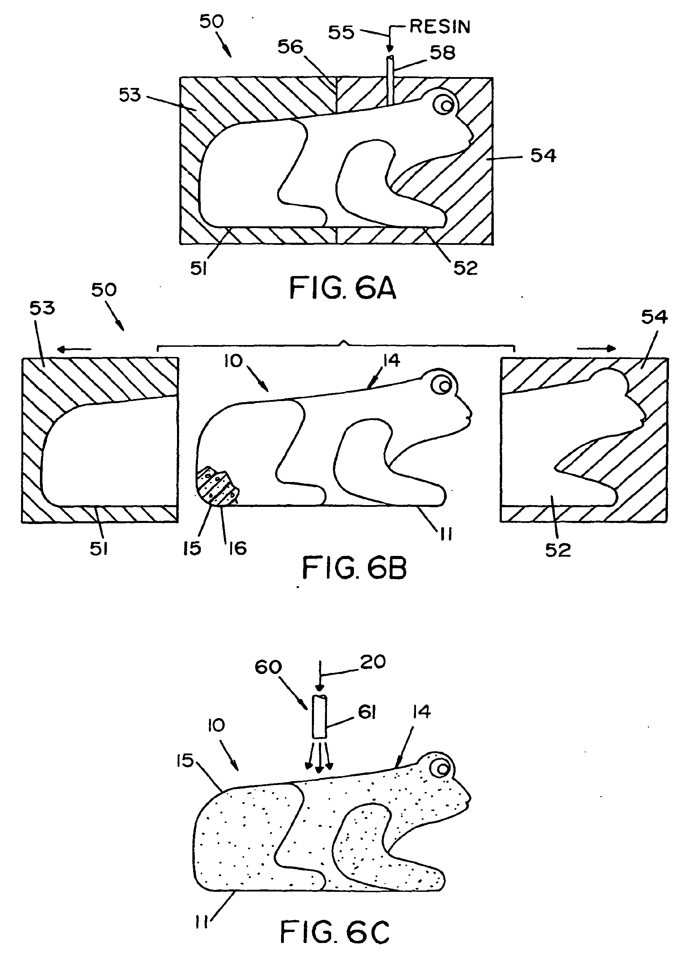

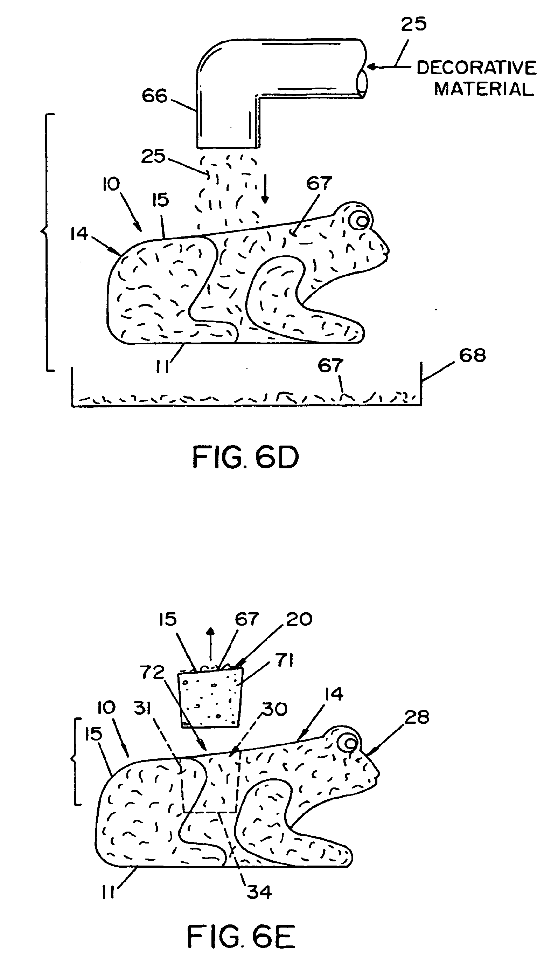

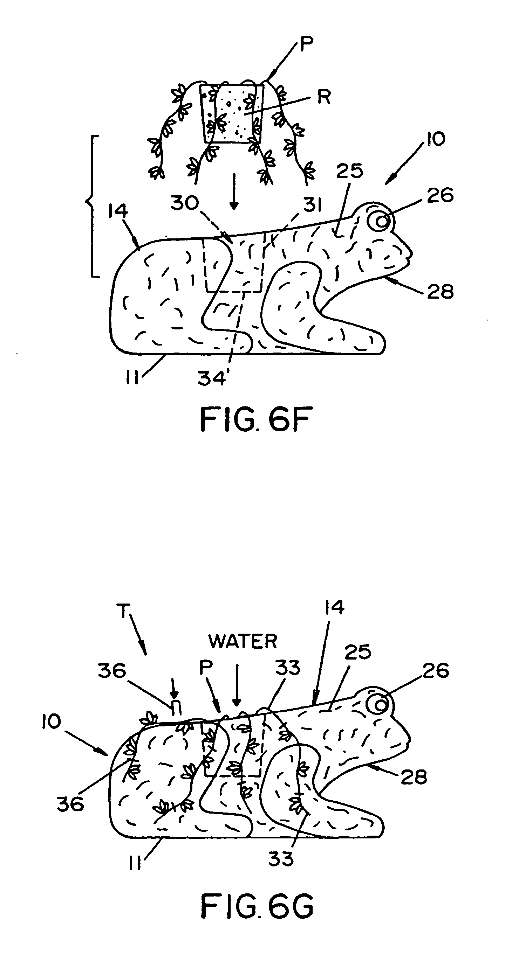

With respect to planting material P. individual plugs or cuttings 29 may be implanted individually on the article 10 and grown to spread and cover the article 10. It will be appreciated that this process could take some time and given the size of the topiary article 10 requires a great amount of greenhouse bench space in comparison to potted plants. To that end, the article 10 may be provided with a plant receiving receptacle generally indicated by the numeral 30. By using a receptacle 30, plant material P may be grown in a pot as is customary in many nurseries, such that, a more mature plant may be implanted within the receptacle 30 and its runners 33 spread over the article 10, as shown in Fig. 6F to shorten the maturation of the topiary. The runners 33 may be attached to the article 10, as by a mechanical fastener, generally indicated by the numeral 35, as shown in Fig. 6G. A variety of mechanical fasteners 35 are available including, for example, a pin 36.

With reference to Figs. 6F and 6G, it will be seen that the planting material P having a root ball R may be placed within receptacle 30 with its runners 33 extending outwardly therefrom. The runners 33 may be draped across the article 10 to naturally take root in the article 10 and grow across the outer surface 14 of article 10 to eventually cover the substrate 10 in a generally continuous fashion to form a topiary T. Alternatively, as shown in Fig. 2, pins 36 may be used to attach the runners 33 to the article 10. Advantageously, the runners 33 may be shaped in a desired manner on the outer surface 14 of the article 10 by using the pins 36. To further shape the growth of the runners 33, trimming and other shaping, as by wire or string, and any other method common in the topiary art, may be performed to achieve the desired effect. In this way, bench space is for the preserved period corresponding to the growth of the plants in pots.

As will be appreciated, when using potted plant material P, the root ball R emerges from the pot having a shape generally conforming to the confines of the pot which may be of various shape, including cylindrical or polygonal forms.

The receptacle 30 has an interior sidewall 31 and base 34 which may be formed and dimensioned to accommodate a given root ball shape. In the example shown, a cylindrical receptacle 30 is provided. The shape of the receptacle 30 is not material, however, because additional material may be used to fill in around the root ball R including soil, peat, sphagnum mass, gravel, or other suitable media. As best shown in Figs. 6F and 6G, by using mature planting material P, the plant material P has an established root system, indicated at 40(Fig. 2), facilitating more rapid growth of the plant material P to cover the article 10. Use of more mature planting material may additionally make the topiary more resilient to improve watering, disease, or other adverse conditions.

To shape article 10, use of any number of conventional molding techniques used in the art may be used. For example, a two-piece mold, generally indicated by the numeral 50, as shown in Fig. 6A may be used. As shown in Fig. 6A, such a mold 50 may be constructed to provide at least one cavity 51 for receipt of foamable resin 55 in a flowable state, such that the resin 55 may be delivered into the cavity 51, and eventually foam or expand into its confines. In the representative mold 50, shown in Fig. 6A, the cavities 51, 52 are divided amongst first and second mold forms 53, 54 joined along a center line 56, such that, when apart, each mold defines a recess corresponding to a portion, in this case one half, of the molded article 10. As schematically depicted in Fig. 6A, the mold 50 is closed and resin 55 is injected through a port 58 into the mold cavity 51, 52 to fill the mold 50. The mold 50 may be maintained at a selected temperature and pressure in accordance with the characteristics of the particular foamable resin 55 being used. After the planting substrate 10 sets up within the mold 50, the first and second mold halves 53, 54 are separated leaving the formed planting substrate 10. As necessary, the planting substrate may be treated, for example, by heat, mechanical, or chemical means, to achieve desired surface characteristics. For example, heat may be used to form the skin 15 on the outer surface 14.

After the planting substrate 10 is formed, an adhesive, paint, or other coating, generally indicated by the numeral 20 in Fig. 6C may optionally be applied the entire planting substrate 10 or portions thereof. The application of the adhesives 21 or coating 20 may be performed in a known manner, for example, by dipping, brushing, or spraying, generally indicated at 60, the coating 20 onto the outer surface 14 of the planting substrate 10. In the example depicted in Fig. 6C, an adhesive 21 is applied to planting substrate 10 by way of a nozzle 61. The application of an adhesive 21 may advantageously be used to attach decorative material 25 to the planting substrate 10. For example, sphagnum moss 67 may be distributed onto the previously coated planting substrate 10, such that the planting substrate 10 is coated in an even layer of sphagnum moss 67. The sphagnum moss 67 or other decorative material 25 may be distributed onto the planting substrate 10 in a known manner, including gravity feed, blowing, or by hand. In the example shown, sphagnum moss 67 is delivered through a drop tube 66 and distributed onto the outer surface of the planting substrate 10 with excess moss 67 being collected in a catch bin 68.

To form the receptacle 30, the receptacle 30 may be carved from the planting substrate 10 as by a common machine operation schematically depicted in Fig. 6E. Alternatively, the mold 50 may be designed to form the receptacle 30 during the molding process. In the example shown in Fig. 6E, a plug 71 is cut from a central portion, indicated at 72, of planting substrate 10. In the example shown, the core 71 is removed after the adhesive 60 and sphagnum moss 67 have been applied such that a clean receptacle 30 is formed, *i.e.*, the internal surfaces 31, 34 of the receptacle 30 are skin free open celled foam. In this way, the open cells provide less restriction to the migration of water, nutrients, and roots than a skinned surface. It would be understood that multiple receptacles 30 may be formed at any number of locations on the planting substrate 10, as well.

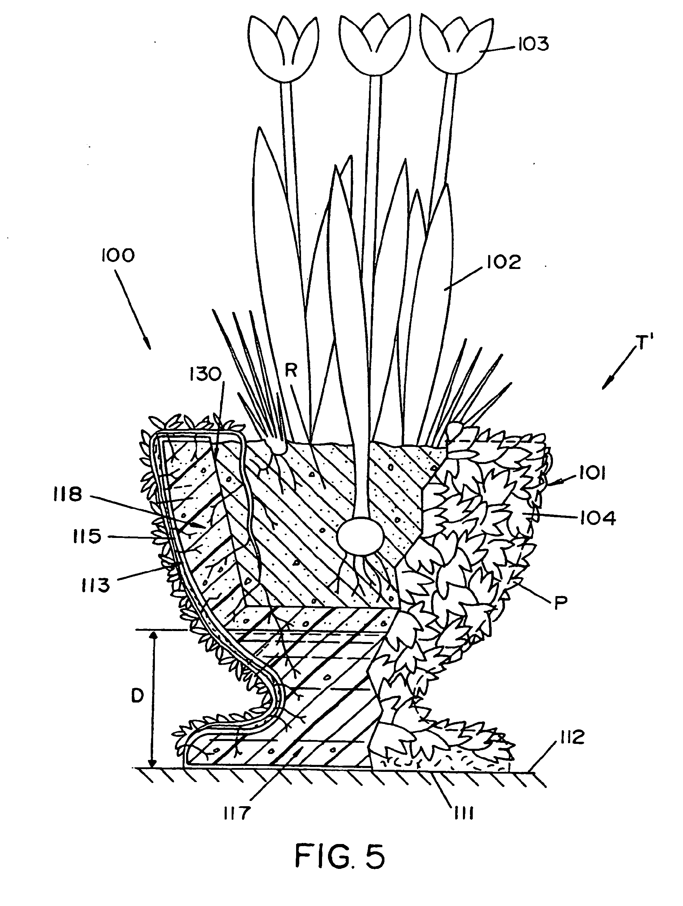

An alternative planting substrate, generally indicated by the numeral 100, is depicted in Fig. 5 and used in the creation of an alternative topiary T'. Planting substrate 100 differs from planting substrate 10 in that its entire exposed surface 113 may be covered with planting material P to form a topiary T'. Fig. 5 further depicts creation of a container-like substrate 100 where a first planting material 101 may be a creeping type material, as is conventionally incorporated into topiaries to provide surface coverage, and a second planting material 102, which may be of any variety including a planting material 112 that contrasts with first material 101 in terms of color, type, or other physical characteristics. In the example shown, vertically growing material bearing flowers 103 is contrasted with creeping leafy material 104 to the desire of the user. It will be appreciated that the container like planting substrate 100 may be used with only a single planting material P, as discussed in the previous embodiment. Like planting substrate 10, planting substrate 100 may be provided with a receptacle 130 to receive more mature planting material. The planting substrate 100 and receptacle 130 may be formed according to the processes discussed with respect to planting substrate 10. Since the entire planting substrate 100 may be covered with a first planting material 111, the user may decide not to precoat the planting substrate 100 with decorative material 25 omitting the application of an adhesive 21 or other coating 20. The adhesive 21 or other coating 20 and decorative material 25 may of course be added at the user's option. For instance, it may be desirable to decorate the planting substrate 100 in anticipation of the period of time when the first plant material 111 does not completely cover the planting substrate 100.

Thus it should be evident that the articles and methods of the present invention are highly effective in making topiary articles, but is not necessarily limited thereto. The article and method of the present invention can be used separately with other equipment, methods and the like, as well as for the manufacture of other topiary materials. Further, it should be further evident that the topiary articles and planting substrate described herein permits the creation of a topiary with the use of a wire frame.

Based upon the foregoing disclosure, it should now be apparent that the planting substrate and topiary article and methods of making the same described herein will carry out the objects set forth hereinabove. It is, therefore, to be understood that any variations evident fall within the scope of the claimed invention and thus, the selection of specific component elements can be determined without departing from the spirit of the invention herein disclosed and described. Thus, the scope of the invention shall include all modifications and variations that may fall within the scope of the attached claims.

## Claims

1. A topiary article used in the creation of a topiary, the topiary article comprising:
a planting substrate (10) constructed of an open cell foam having a selected topiary shape, said planting substrate (10) having an outer surface (14); and
a skin (15) formed on said outer surface (14) of said planting substrate, wherein said skin (15) substantially covers the entire outer surface (14) of the planting substrate (10) and greatly reduces evaporative water loss, **characterized in that** a receptacle (30) is formed in said planting substrate (10), said receptacle (30) being adapted to receive roots (40) of a mature plant (P).

2. The topiary article of claim 1, wherein said planting substrate (10) is at least semi-rigid.

3. The topiary article of claim 1, wherein said planting substrate (10) has a saturated zone (17) and an unsaturated zone (18), said unsaturated zone (18) being more aerated than said saturated zone (17).

4. The topiary article of claim 1, further comprising a coating located on at least a portion of said outer surface (14) of said planting substrate (10), wherein said coating (20, 21) is adapted to reduce evaporative water loss from said planting substrate (10).

5. The topiary article of claim 4, wherein said coating is an adhesive (21).

6. The topiary article of claim 5, wherein the planting substrate (10) includes a base (11), and wherein adhesive (21) is not applied to the base (11).

7. The topiary article of claim 1, wherein the planting substrate (10) is formed by injecting foamable resin (55) into a mold (50).

8. A method of creating a topiary article according to one of the preceding claims comprising the steps of:
providing a article constructed of an open cell foam material having a selected shape, creating a receptacle (30) within the article adapted to receive a mature plant material (P), the plant material (P) having runners (33), attaching the runners (33) at selected locations on the article, and propagating growth of the plant material (P) to cover at least a portion of the article to form the topiary.

9. Usage of an at least semi-rigid planting substrate (10) constructed of an open celled foam and having a selected shape, said planting substrate (10) having an outer surface (14) defining the selected shape and a core (16) within said outer surface (14), wherein said core (16) includes a saturated zone (17) and an unsaturated zone (18), said unsaturated zone (18) being more aerated than said saturated zone (17); wherein water migrates to said saturated zone (17) to provide a water source within said planting substrate (10) toward which roots (40) of planting material (P) will grow, and wherein a skin (15) substantially covers the entire outer surface (14), said skin (15) greatly reducing evaporative water loss, for propagating planting material (P) having roots (40) fed with a supply of water to form a topiary.

## Patentansprüche

1. Formschnittgartenartikel, zum Einsatz bei der Erstellung eines Formschnittgartens, wobei der formschnittgartenartikel Folgendes aufweist:
ein Pflanzsubstrat (10), das aus einem offenzelligen Schaum mit einer ausgewählten Formschnittform konstruiert ist, wobei das Pflanzsubstrat (10) eine Außenfläche (14) und eine Haut (15) besitzt, die auf der Außenfläche (14) des Pflanzsubstrats gebildet ist, wobei die Haut (15) im Wesentlichen die ganze Außenfläche (14) des Pflanzsubstrats (10) bedeckt und den Verdunstungswasserverlust stark verringert, **dadurch gekennzeichnet, dass** in dem Pflanzsubstrat (10) eine Aufnahme (30) geformt ist, die dazu angepasst ist, Wurzeln (40) einer entwickelten Pflanze (P) aufzunehmen.

2. Formschnittgartenartikel nach Anspruch 1, bei dem das Pflansubstrat (10) zumindest halbfest ist.

3. Formschnittgartenartikel nach Anspruch 1, bei dem das Pflanzsubstrat (10) eine gesättigte Zone (17) und eine ungesättigte Zone (18) aufweist, und die ungesättigte Zone (18) stärker belüftet ist als die gesättigte Zone (17).

4. Formschnittgartenartikel nach Anspruch 1, der ferner eine Beschichtung aufweist, die sich zumindest an einem Abschnitt der Außenfläche (14) des Pflanzsubstrats (10) befindet, wobei die Beschichtung (20, 21) dazu angepasst ist, den Verdunstungswasserverlust des Pflanzsubstrats (10) zu verringern.

5. Formschnittgartenartikel nach Anspruch 4, wobei die Beschichtung ein Klebstoff (21) ist.

6. Formschnittgartenartikel nach Anspruch 5, wobei das Pflanzsubstrat (10) eine Basis (11) aufweist, und wobei der Klebstoff (21) nicht auf die Basis (11) aufgetragen ist.

7. Formschnittgartenartikel nach Anspruch 1, bei dem das Pflanzsubstrat (10) durch Einspritzen von aufschäumbarem Harz (55) in eine Form (50) geformt wird.

8. Verfahren zum Schaffen eines Formschnittgartenartikels nach einem der vorhergehenden Ansprüche, das die folgenden Schritte aufweist:
Bereitstellen eines Artikels, der aus einem offenzelligen Schaummaterial besteht, welches eine ausgewählte Form aufweist, Schaffen einer Aufnahme (30) innerhalb des Artikels, die dazu angepasst ist, ein entwickeltes Pflanzenmaterial (P) aufzunehmen, welches Ausleger (33) besitzt, Befestigen der Ausleger (33) an ausgewählten Stellen auf dem Artikel und Ausweiten des Wachstums des Pflanzenmaterials (P), so dass dieses zur Bildung des Formschnittgartenartikels zumindest einen Abschnitt des Artikels bedeckt.

9. Verwendung wenigstens eines halbfesten Pflanzsubstrats (10), das aus einem offenzelligen Schaum aufgebaut ist und eine ausgewählte Form aufweist, wobei das Pflanzsubstrat (10) eine Außenfläche (14), die die ausgewählte Form definiert, und einen Kern (16) innerhalb der Außenfläche (14) aufweist, der eine gesättigte Zone (17) und eine ungesättigte Zone (18) enthält, wobei die ungesättigte Zone (18) stärker belüftet ist als die gesättigte Zone (17), und wobei Wasser zu der gesättigten Zone (17) wandert, um eine Wasserquelle innerhalb des Pflanzsubstrats (10) bereitzustellen, zu welcher Wurzeln (40) des Pflanzenmaterials (P) wachsen, und wobei eine Haut (15) im Wesentlichen die ganze Außenfläche (14) abdeckt und Verdunstungswasserverluste stark reduziert,
zum Ausweiten von Wurzeln (40) aufweisendem, durch eine Wasserversorgung versorgtem Pflanzenmaterial (P) zur Bildung eines Formschnittgartenartikels.

## Revendications

1. Article topiaire utilisé dans la création d'une topiaire, l'article topiaire comprenant :
un substrat de plantation (10) construit à partir de mousse à cellules ouvertes ayant une forme topiaire choisie, ledit substrat de plantation (10) ayant une surface extérieure (14) ; et
une peau (15) formée sur ladite surface extérieure (14) dudit substrat de plantation,
dans lequel ladite peau (15) recouvre substantiellement la totalité de la surface extérieure (14) du substrat de plantation (10) et réduit fortement la perte d'eau par évaporation, **caractérisé en ce qu'**un réceptacle (30) est formé dans ledit substrat de plantation (10), ledit réceptacle (30) étant adapté pour recevoir les racines (40) d'une plante à maturité (P).

2. Article topiaire selon la revendication 1, dans lequel ledit substrat de plantation (10) est au moins semi-rigide.

3. Article topiaire selon la revendication 1, dans lequel ledit substrat de plantation (10) comporte une zone saturée (17) et une zone insaturée (18), ladite zone insaturée (18) étant plus aérée que ladite zone saturée (17).

4. Article topiaire selon la revendication 1, comprenant en outre un revêtement située sur au moins une partie de ladite surface extérieure (14) dudit substrat de plantation (10), dans lequel ledit revêtement (20, 21) est adapté pour réduire la perte d'eau par évaporation à partir dudit substrat de plantation (10).

5. Article topiaire selon la revendication 4, dans lequel ledit revêtement est un adhésif (21).

6. Article topiaire selon la revendication 5, dans lequel le substrat de plantation (10) comprend une base (11), et dans lequel un adhésif (21) n'est pas appliqué à la base (11).

7. Article topiaire selon la revendication 1, dans lequel le substrat de plantation (10) est formé en injectant une résine expansible (55) dans un moule (50).

8. Procédé de création d'un article topiaire selon l'une quelconque des revendications précédentes, comprenant les étapes :
fournir un article construit à partir d'un matériau en mousse à cellules ouvertes ayant une forme choisie, créer un réceptacle (30) à l'intérieur de l'article adapté pour recevoir un matériel végétal à maturité (P), le matériel végétal (P) ayant des stolons (33), attacher les stolons (33) à des emplacement choisis sur l'article, et développer la croissance du matériel végétal (P) pour recouvrir au moins une partie de l'article afin de former la topiaire.

9. Utilisation d'au moins un substrat de plantation (10) semi-rigide construit à partir d'une mousse à cellules ouvertes et ayant une forme choisie, ledit substrat de plantation (10)
ayant une surface extérieure (14) définissant la forme choisie et un noyau (16) à l'intérieur de ladite surface extérieure (14), dans lequel ledit noyau (16) comprend une zone saturée (17) et une zone insaturée (18), ladite zone insaturée (18) étant plus aérée que ladite zone saturée (17) ;
où l'eau migre jusqu'à ladite zone saturée (17) pour fournir une source d'eau à l'intérieur dudit substrat de plantation (10) vers laquelle les racines (40) du matériel végétal (P) vont croître, et où une peau (15) recouvre substantiellement la totalité de la surface extérieure (14), ladite peau (15) réduisant fortement la perte d'eau par évaporation, pour permettre le développement du matériel végétal (P) ayant des racines (40) nourries par une alimentation en eau, afin de former une topiaire.
